# EUROPEAN PATENT APPLICATION

(11) **EP 4 063 336 A1**
(43) Date of publication of application: **28.09.2022**
(21) Application number: 21020406.1
(22) Date of filing: 09.08.2021
(51) Int. Cl.: C04B 28/12

(54) **ECOBLOCK WITH BAMBOO CANES**

(30) Priority: 26.03.2021 IT 202100007559
(71) Applicant: Prespaglia Srls, 70026 Modugno (BA) (IT)
(72) Inventor: The designation of the inventor has not yet been filed
(74) Representative: Cornacchia, Pierluigi

(57) **Abstract**

The present invention relates to a method of thermal insulation and at the same time structural reinforcement of the walls of a housing structure. In particular, it concerns an ecological prefabricated element where also the realization process is eco-sustainable in line also with CAM (minimum environmental criteria).

## Description

of the patent for industrial invention entitled: "Ecoblock with bamboo canes" in the name of Prespaglia Italia Srls electively domiciled at the law firm of lawyer Pierluigi Cornacchia, Via Principi di Savoia, 67 - Lecce.

### Field of the technique

The present invention relates to a method of thermal insulation and at the same time structural reinforcement of the walls of a housing structure. In particular, it concerns an ecological prefabricated element where also the realization process is eco-sustainable in line also with CAM (minimum environmental criteria).

### State of the art

The state of the art reveals that the current methods of structural reinforcement as well as thermal insulation of housing structures foresee the need to create buildings with good energy efficiency performance, but often they do not comply with a low environmental impact and do not follow at all the principles of green building. Consequently, in the building market there is a great industrial ferment to find solutions that are both economical and at the same time have a reduced environmental impact. Even in the construction process of the material. The traditional method of making bricks or walls does not take into account the healthiness of indoor and outdoor environments and their "weight" in terms of ecological footprint. The state of the art in reference to the present buildings shows, moreover, that they are not very reliable in terms of guaranteeing the transmittance prescribed in correlation to the constructive process to realize them, as well as having a production process quite energy-consuming. In addition to the fact that when they are optimal from the point of view of insulation they are not at all at the structural level and vice versa.

With reference to the state of the art, there are industrial patents such as "102009901721765 - ELEMENT FOR CONSTRUCTION" or "102008901643071-STRUCTURAL ELEMENT IN PLASTIC MATERIAL". However, such patents and others, even though they boast technical advantages, have in no way devised the use of natural raw materials like the present invention, nor is the construction process to be considered as being based on the same modus operandi as the present invention.

### Description of the invention

The present invention is a continuation of patent granted No. 102017000078844 (Straw and lime brick and its construction process). This is a brick whose percentages of preparation of the dry mixture are by weight: Lime between 70% and 85%, straw between 15% and 30%. The screed to be prepared before being inserted into the clean formwork is spread, on the inner sides, a "veil" of natural oil; the thermal screed is made having as a percentage: dry mixture of lime and straw that varies, by weight, between 85% and up to 95% while the percentage of the weight of water, varies accordingly, from 5% up to 15%.

In addition to ensuring structural qualities due to the innovative use of structural elements such as bamboo canes, is equipped with thermal, acoustic and hygrometric comfort in addition to the fact of being permeable to water vapor or is breathable and is resistant to frost, insects and rodents and finally has a reduced amount of CO2 emissions during manufacture because it adopts a process called "cold". The laying takes place by arranging the bricks differentiating basic bricks and bricks that have holes of smaller diameters than the underlying bricks. This brick is ideal for use as a thermal coat for exteriors to be superimposed on the facades of existing buildings and that require an intervention of energy efficiency. Thanks to its characteristics, it guarantees high thermal insulation performance both at low and high temperatures.

It should be noted that this component of green building has an enormous versatility, in fact, can be easily used for the construction of walls in all structures, where the structural elements are made of wood, steel or reinforced concrete. Its main function is to make external perimeter walls of a building. However, it can be suitable not only for external plugging, but there is a possibility that it can also be used to make internal masonry, in which case it is necessary to add a layer of plaster for internal use.

The brick described and its method of realization constitute a new and inventive alternative to the state of the art, solving a series of industrial problems related to the reliability and speed of assembly of the bricks themselves as well as the guarantee of having natural materials that greatly reduce the environmental impact of the built environment.

### Detailed description of the invention and its figures

Further features and advantages of the device according to the invention will become clearer with the following detailed description of a form of embodiment of the invention, made with reference to the attached drawings, provided for illustrative and non-limiting purposes only.

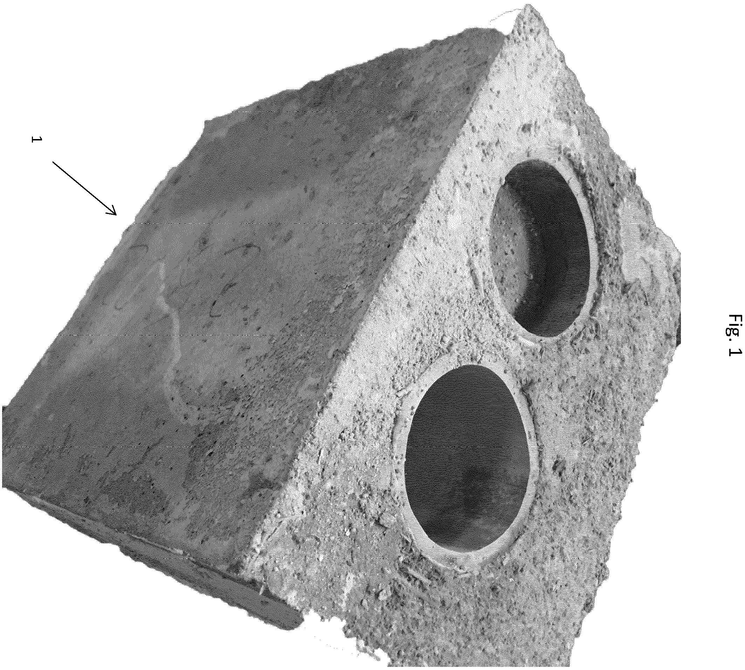

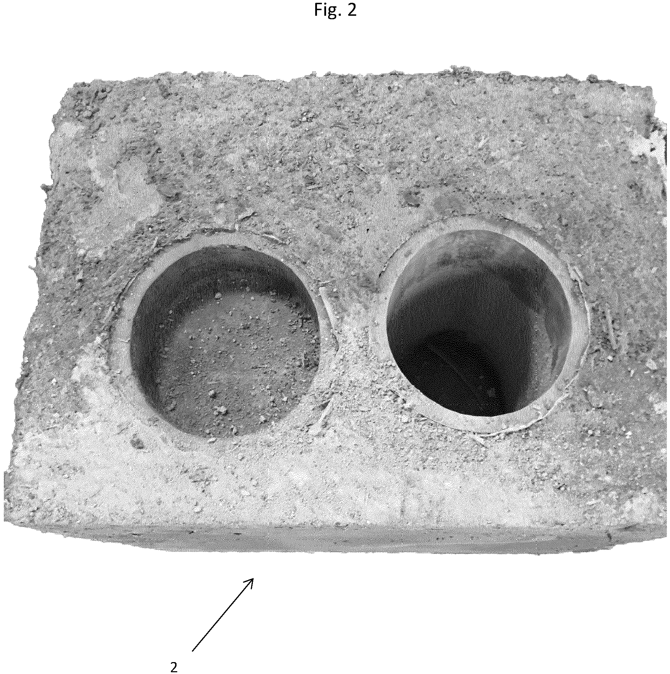

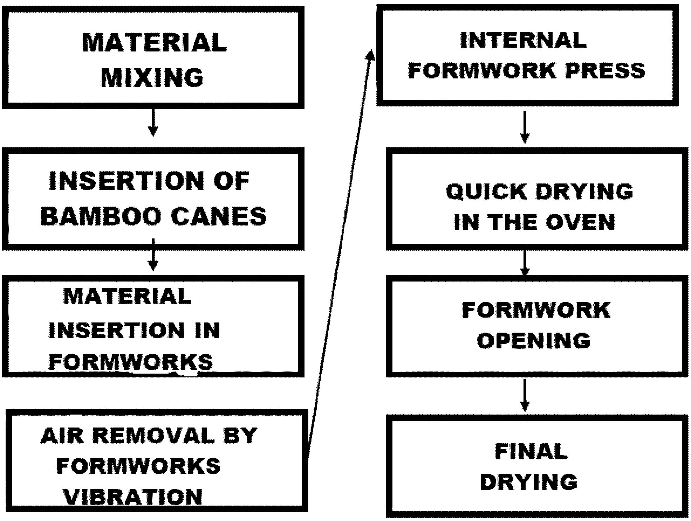

Figure 1 and 2 illustrate the dimensions of the brick where it has the following dimensions:
- Dimensions(mm) H 405 x L 395 x Thickness 295
- Average mass: about 16934 g
- Average resistance in the direction of vertical loads: about 1.62 N/mm2

The reference standards for the determination of the mechanical characteristics are UNI EN 772-1-2002 and UNI EN 772-16:2005.

Fig. 3 illustrates the realization procedure including the following stages:
- Mixing of materials (straw, lime and water)
- Insertion of bamboo canes in the formwork
- Insertion of materials in the formworks
- Formwork vibration for air removal
- Pressing inside the formwork
- Quick drying in the oven
- Formwork opening and final drying at room temperature.

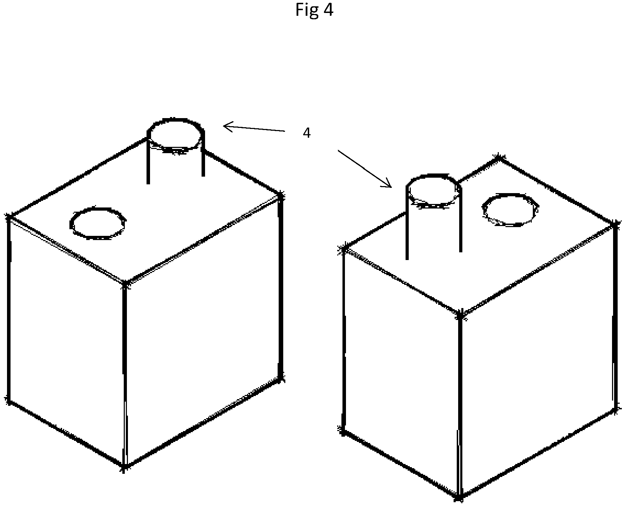

Figure 4 shows an example of how the bricks can have in addition to 2 cylindricalshaped holes to accommodate an overlapping brick including 2 cylinders, made of bamboo cane, protruding to engage in the bricks above or above. Generally, the best proposed technical solution is to arrange the brick including a protruding cylinder and a hole on the facade facing upwards while at the same time the same brick has a hole on both the upper and lower side.

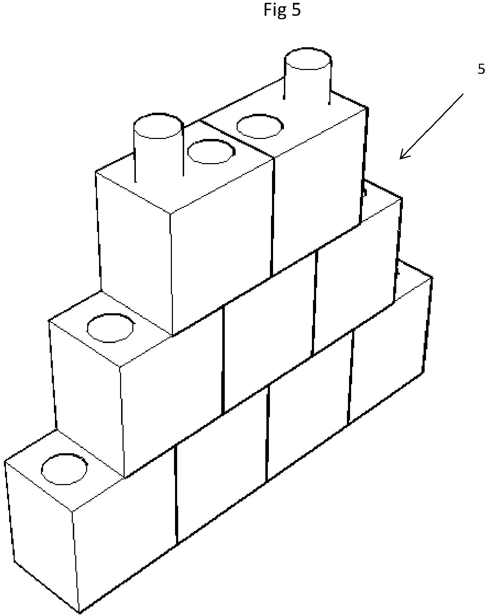

Figure 5 shows an example of how the bricks are overlapped in a staggered way in order to increase the structural resistance of the positioning type where the first row of bricks.

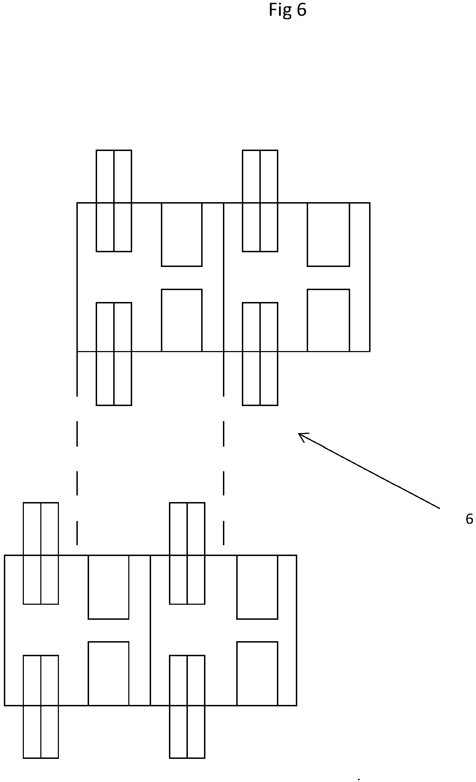

Figure 6 shows the best solution for the assembly of this type of bricks where the brick has on its upper side a protruding cylinder made of bamboo cane and on the same face a hole that is mirrored equal arrangement on the lower face of the brick so that all the bricks can be supported and interlocked with the upper and/or lower brick.

The bamboo canes are generally about 13 cm in diameter and can be assembled either one or two per brick. The variation in bamboo cane diameters ranges from 6 cm to 15 cm in diameter.

The holes in the bricks can be used not only as structural reinforcement but also as holes where pipes for water, electrical, computer systems etc. can be passed through.

The present invention has been described by way of illustration, but not limitation, in accordance with its preferred forms of realization, but it is to be understood that variations and/or modifications may be made by experts in the field without departing from its scope of protection, as defined by the appended claims.

## Claims

1. Brick (1) composed of a dry mixture of lime and straw which varies, by weight, between 85% and 95% and by a percentage of the weight of water which consequently varies, from 5% up to 15% ;

2. Brick according to the preceding claim **characterized by** the presence inside it of bamboo canes of cylindrical volume of different sizes having a diameter comprised between 6 and 13 cm (1-2).

3. Brick according to the preceding claims **characterized in** a preferred but not exclusive embodiment of a size of approximately (mm) H 405 x L 395 x thickness 295; of an average mass of about 16934 gr and of mechanical characteristics having an average resistance in the direction of vertical loads of about 1.62 N/mm2.

4. Brick according to the preceding claims **characterized by** the fact that the bamboo canes can be inserted in a protruding way or as a hole or the cylindrical shape **characterized by** the bamboo cane can emerge both on the lower and upper face of the brick itself (4,5,6 ) the same can be the hole on both the lower and upper side; the longitudinal dimension of protrusion outside or length of the hole with respect to the upper or lower side can vary according to the type of wall to be built at the structural level.

5. Brick according to the preceding claims that in a preferred but not exclusive embodiment it can have a complete hole or from the lower side to the upper side, at the same time it is possible to insert, with a smaller diameter of the hole, any longitudinal structural element of different length depending on the type of wall to be built on a structural level.

6. Process for manufacturing a brick according to previous claims (3) **characterized by** the following manufacturing steps:
- Mixing of materials (straw, lime and water) and amalgam until a homogeneous degree of plasticity is obtained;
- Insertion of bamboo canes in the formwork;
- insertion of materials in the formworks;
- Vibration formwork for air removal;
- Press inside the formwork;
- Quick drying in the oven;
- Formwork opening and final drying at a room temperature.
